# EUROPEAN PATENT APPLICATION

(11) **EP 4 484 961 A1**
(43) Date of publication of application: **01.01.2025**
(21) Application number: 22928976.4
(22) Date of filing: 27.12.2022
(51) Int. Cl.: G01N 35/00

(54) **AUTOMATIC ANALYSIS DEVICE**

(30) Priority: 22.02.2022 JP 2022025558
(71) Applicant: HITACHI HIGH-TECH CORPORATION, Tokyo 105-6409 (JP)
(72) Inventor: WATANABE Ryota, Tokyo 105-6409 (JP); YAGI Kenichi, Tokyo 105-6409 (JP); AOYAGI Shota, Tokyo 105-6409 (JP); ITO Kenta, Tokyo 105-6409 (JP)
(74) Representative: Strehl Schübel-Hopf & Partner
(86) International application number: PCT/JP2022/048319
(87) International publication number: WO 2023/162461

(57) **Abstract**

The purpose of the present invention is to provide an automatic analysis device that can automatically replenish a reagent while suppressing an increase in cost and an increase in unit size. Therefore, the present invention is an automatic analysis device comprising: an insertion section into which is inserted a first container accommodating a liquid; an analysis unit that analyzes a sample; and a conveyance line that conveys the first container from the insertion section to the analysis unit. The analysis unit comprises: a measuring unit that measures a target component included in the sample; a reagent installation section in which a second container accommodating the reagent is arranged; and an aliquoting mechanism that suctions the reagent from the first container and discharges the reagent into the second container.

## Description

### Technical Field

The present invention relates to an automatic analysis device.

### Background Art

In an automatic analysis device that analyzes a sample such as blood or urine, a reagent to be used for cleaning or conditioning a mechanism that comes into direct contact with the sample may be placed in an analysis unit. The reagent is generally placed at a position accessible by the mechanism in the analysis unit, and during replenishment, it is necessary for a user to stop the analysis unit once and to perform replenishment while safety of the user is secured. However, when the analysis unit is stopped, an analysis operation also needs to be stopped, and it also takes time to resume the analysis operation. As a result, output of an analysis result is delayed.

Therefore, a technique of automatic replenishment of a reagent has been proposed. For example, PTL 1 discloses an analysis system that automatically supplies a reagent to an analysis unit using a conveyance line that conveys a specimen.

### Citation List

### Patent Literature

PTL 1: JP2011-27636A

### Summary of Invention

### Technical Problem

However, in the analysis system described in PTL 1, a reagent container transfer device that transfers a reagent container itself to a reagent storage is provided in each analysis unit, and is separated from a specimen aliquoting device that aspirates a specimen from a specimen container conveyed by a conveyance line and that discharges the specimen into a reaction container. Therefore, there are disadvantages such as an increase in cost and an increase in unit size.

An object of the invention is to provide an automatic analysis device capable of automatically replenishing a reagent while preventing an increase in cost and an increase in unit size.

### Solution to Problem

In order to solve the above problems, the invention provides an automatic analysis device including: a feeding portion into which a first container containing a liquid is fed; an analysis unit configured to analyze a sample; and a conveyance line configured to convey the first container from the feeding portion to the analysis unit. The analysis unit includes: a measurement unit configured to measure a target component contained in the sample; a reagent placement portion in which a second container containing a reagent is disposed; and an aliquoting mechanism configured to aspirate the reagent from the first container and discharge the reagent into the second container.

### Advantageous Effects of Invention

According to the invention, it is possible to provide an automatic analysis device capable of automatically replenishing a reagent while preventing an increase in cost and an increase in unit size.

### Brief Description of Drawings

[FIG. 1] FIG. 1 is a schematic diagram illustrating a configuration of an automatic analysis device.
[FIG. 2] FIG. 2 is a schematic diagram illustrating a configuration of an analysis unit.
[FIG. 3] FIG. 3 is a perspective view illustrating configurations of a sample container and a carrier.
[FIG. 4] FIG. 4 is an example of a screen for presetting association information on a container containing a reagent and a carrier.
[FIG. 5] FIG. 5 is a flowchart illustrating a process of replenishing a reagent container with a reagent.

### Description of Embodiments

Hereinafter, an automatic analysis device according to an embodiment of the invention will be described with reference to the drawings.

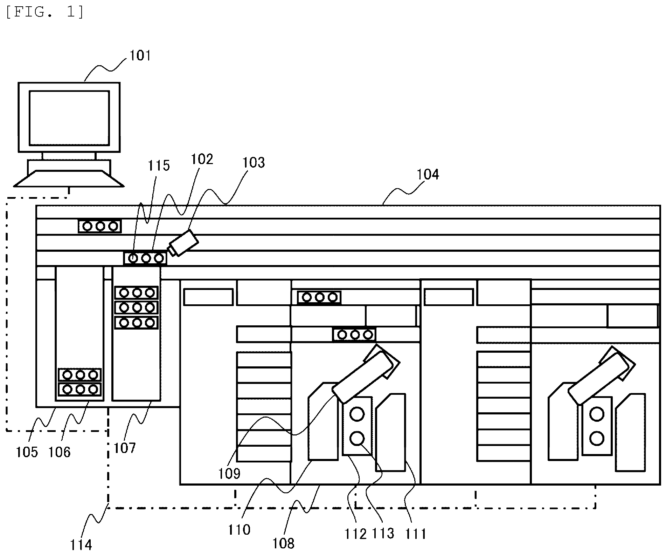

FIG. 1 is a schematic diagram illustrating a configuration of the automatic analysis device. As illustrated in FIG. 1, the automatic analysis device according to the present embodiment includes a specimen feeding and collecting unit 105 in which a feeding portion 107 and a collecting unit 106 are integrated, an ID reader 103, a conveyance line 104, an analysis unit 108, and a control computer 101. A plurality of analysis units 108 may be provided, or one analysis unit 108 may be provided. The control computer 101 is connected to the specimen feeding and collecting unit 105, the analysis unit 108, and the like via a communication line 114 such as Ethernet, and can transmit and receive necessary data.

The feeding portion 107 is a portion fed with a carrier 102 on which sample containers 115 are placed. The sample containers 115 contain a sample such as blood or urine collected from a subject. The collecting unit 106 is a portion where the carrier 102 is collected. On the carrier 102, the sample containers 115 containing the analyzed sample are placed. The ID reader 103 is a device that reads a carrier ID 119 attached to the carrier 102 and a container ID 118 attached to the sample container 115 and is, for example, a barcode reader or an RFID reader. The conveyance line 104 is a device that conveys the carrier 102 on which the sample containers 115 are placed from the feeding portion 107 to the analysis unit 108. The control computer 101 (control unit) controls the ID reader 103, the conveyance line 104, and the like. Although not illustrated, the control computer 101 is also connected to a display unit such as a display on which an analysis result or the like transmitted from the analysis unit 108 is displayed, and an input unit such as a keyboard or a mouse used when a user inputs setting information or the like.

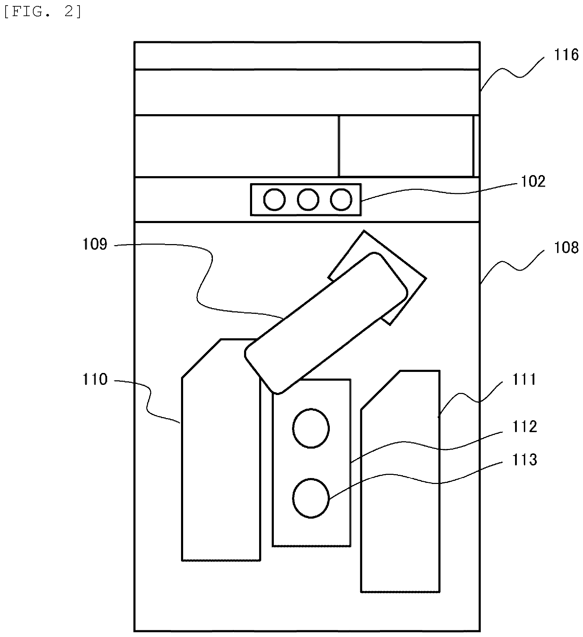

Next, a configuration of the analysis unit 108 that analyzes a sample will be specifically described. FIG. 2 is a schematic diagram illustrating the configuration of the analysis unit. The analysis unit 108 includes an inner-analysis-unit conveyance line 116, a measurement unit (a first measurement unit 110 and a second measurement unit 111), a reagent placement portion 112, and an aliquoting mechanism 109. In the present embodiment, an electrolyte analysis unit is described as an example of the analysis unit 108. Alternatively, the analysis unit 108 may be a biochemical analysis unit or an immunoassay unit.

The inner-analysis-unit conveyance line 116 conveys the carrier 102 within a range inside the analysis unit 108. The carrier 102 conveyed via the conveyance line 104 is gripped by a hand mechanism (not illustrated) and transferred to the inner-analysis-unit conveyance line 116.

The inner-analysis-unit conveyance line 116 conveys the carrier 102 to an aliquoting position as illustrated in FIG. 2. The carrier 102, when aliquoting ends, is conveyed again by the inner-analysis-unit conveyance line 116, gripped by the hand mechanism, and transferred to the conveyance line 104. The carrier 102 is conveyed to the collecting unit 106 by the conveyance line 104.

Each measurement unit measures a target component contained in the sample, and includes, although not illustrated, a dilution tank that stores the sample and a diluent, a detector that detects a potential of the diluted sample, and a flow path that connects the dilution tank to the detector. When the sample is analyzed, the aliquoting mechanism 109 aspirates the sample from the sample container 115 and discharges the sample into the dilution tank in the measurement unit. The analysis unit 108 according to the present embodiment is also provided with a diluent bottle containing the diluent, a syringe for feeding a liquid, and the like. By an operation of the syringe, the diluent in the diluent bottle is supplied to the dilution tank in each measurement unit. Thereafter, a liquid containing the diluted sample in the dilution tank is further supplied to the detector via the flow path by the operation of the syringe. The detector detects the potential of the fed liquid by an electrode, and transmits a detection result to the control computer 101 by the communication line 114. A remaining amount and an expiration date of the diluent in the diluent bottle are managed by an RFID or the like attached to the diluent bottle.

Reagent containers 113 containing a reagent are disposed in the reagent placement portion 112. The reagent contained in the reagent container 113 is a cleaning liquid or a conditioner, and is used for cleaning or conditioning a mechanism that comes into direct contact with the sample. For example, the cleaning liquid cleans an aliquoting nozzle by being aspirated by the aliquoting mechanism 109, cleans the dilution tank by being supplied into the dilution tank, and further cleans the flow path from the dilution tank to the detector by the operation of the syringe as well. The conditioner is supplied to the flow path from the dilution tank to the detector to condition the flow path and the like.

The aliquoting mechanism 109 includes the aliquoting nozzle capable of rotating about a vertical axis and moving in a vertical direction. When a sample is contained in the sample container 115, this aliquoting mechanism 109 aspirates the sample and discharges the sample into the dilution tank in the measurement unit, and when a reagent (cleaning liquid or the like) is contained in the sample container 115, the aliquoting mechanism 109 aspirates the reagent and discharges the reagent into the reagent container 113 in the reagent placement portion 112. Since a liquid (reagent) other than a sample may be contained in the sample container 115 according to the present embodiment as described later, the sample container 115 may be referred to as a first container. On the other hand, the reagent container 113 may be referred to as a second container.

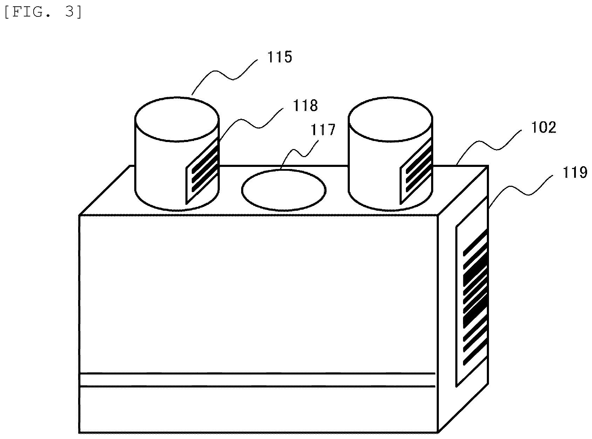

FIG. 3 is a perspective view illustrating configurations of a sample container and a carrier. A sample container setting portion 117 (opening portion) for inserting the sample container 115 is provided on an upper surface of the carrier 102. The carrier 102 according to the present embodiment includes a plurality of sample container setting portions 117, and may include only one sample container setting portion 117. The carrier ID 119 in association with information on a type of the carrier 102 and the like is attached to the carrier 102, and the container ID 118 in association with information on a sample or a reagent to be contained is attached to the sample container 115.

When the carrier 102 fed into the feeding portion 107 is being conveyed to the analysis unit 108 by the conveyance line 104, the container ID 118 of the sample container 115 and the carrier ID 119 of the carrier 102 are read at a reading position of the ID reader 103. The control computer 101 associates information in association with each ID read by the ID reader 103 with information preset by the user using the input unit. The sample container 115 specified to contain the reagent according to this association is conveyed to the predetermined analysis unit 108 together with the carrier 102 on which the sample container 115 is placed, and then the reagent in the container is aspirated by the aliquoting mechanism 109 and discharged into the reagent container 113 in the reagent placement portion 112.

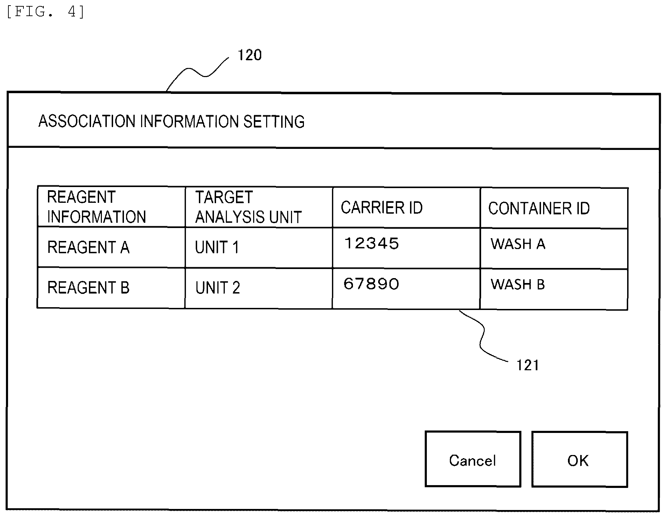

Here, in order to specify which sample container 115 contains the reagent, it is necessary for the control computer 101 to preset association information. FIG. 4 is an example of a screen for presetting association information on a container containing a reagent and a carrier. When the sample container 115 containing the reagent is present, the user uses the input unit to input the association information in an input field 121 of the screen (association information setting screen 120) which is illustrated in FIG. 4 and displayed on the display unit. The input information includes a type of reagent, the analysis unit 108 serving as a supply destination of the reagent, the container ID 118 of the sample container 115 containing the reagent, the carrier ID 119 of the carrier 102 on which the sample container 115 is placed, and the like. In the present embodiment, it is assumed that the user directly inputs and sets the container ID 118 and the like. Alternatively, each piece of association information may be set by the user selecting from a plurality of candidates registered in advance. Similarly, association information may also be set for a container containing a sample.

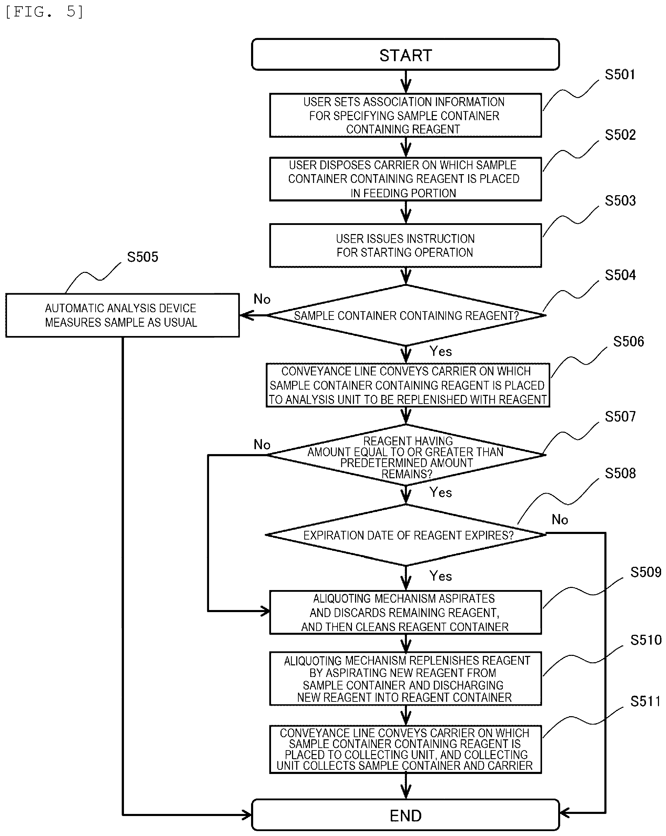

Next, a series of processes will be specifically described in which the automatic analysis device automatically replenishes the reagent container 113 disposed in the reagent placement portion 112 with the reagent. FIG. 5 is a flowchart illustrating a process of replenishing a reagent container with a reagent.

First, the user uses the input unit to input information on associating the reagent with the sample container 115 containing the reagent while referring to the association information setting screen 120 illustrated in FIG. 4 (step S501). Further, the user causes the reagent to be contained in the sample container 115 on the carrier 102 and disposes the carrier 102 in the feeding portion 107 (step S502). At this time, the user may also dispose the carrier 102 on which the sample container 115 containing a sample is placed in the feeding portion 107. Thereafter, the user uses the input unit to issue an instruction for starting an operation (step S503).

The above processes are performed by the user.

Next, when the conveyance line 104 conveys the carrier 102 to reach the reading position of the ID reader 103, the ID reader 103 reads the container ID 118 of the sample container 115 and the carrier ID 119 of the carrier 102. The control computer 101 determines whether a sample container is the sample container 115 containing the reagent based on each ID read by the ID reader 103 (step S504). When the sample container is determined not to be the sample container 115 containing the reagent, that is, when the sample container is determined to be the sample container 115 containing the sample, the sample container 115 is conveyed to the predetermined analysis unit 108, and then the sample is aliquoted to the measurement unit by the aliquoting mechanism 109 to be measured as a biological sample (step S505).

On the other hand, in step S504, when the sample container is determined to be the sample container 115 containing the reagent, the conveyance line 104 conveys the carrier 102 on which the sample container 115 is placed to the analysis unit 108 to be replenished with the reagent (step S506). Further, the inner-analysis-unit conveyance line 116 conveys the carrier 102 to the aliquoting position.

Thereafter, the control computer 101 measures the amount of reagent remaining in the reagent container 113 disposed in the reagent placement portion 112 by a liquid level detecting function or the like of the aliquoting mechanism 109, and determines whether a measured value thereof is equal to or greater than a predetermined amount (step S507). When it is determined that the reagent having an amount equal to or greater than the predetermined amount remains, the control computer 101 determines whether an expiration date of the reagent expires (step S508). When it is determined that the expiration date of the reagent does not expire, replenishment of the reagent is not necessary, and thus the process ends.

On the other hand, in step S08, when it is determined that the expiration date of the reagent expires, the aliquoting mechanism 109 aspirates the remaining reagent and discards the remaining reagent to a discarding unit (not illustrated), and then cleans the reagent container 113 by aspirating a detergent from a detergent bottle (not illustrated) and discharging the detergent into the reagent container 113 and the like (step S509). In step S507, when it is determined that the reagent having an amount equal to or greater than the predetermined amount does not remain, determination of the expiration date in step S508 is omitted, and the process in step S509 is performed.

When cleaning of the reagent container 113 ends, the aliquoting mechanism 109 replenishes the reagent by aspirating the reagent from the sample container 115 at the aliquoting position and discharging the reagent into the reagent container 113 (step S510). Thereafter, the inner-analysis-unit conveyance line 116 and the conveyance line 104 convey the carrier 102 on which the sample container 115 after aspiration of the reagent is placed to the collecting unit 106, and the collecting unit 106 collects the sample container 115 and the carrier 102 (step S511) .

Determinations in steps S507 and S508 may be performed by the control unit in each analysis unit 108 instead of the control computer 101.

As described above, in the automatic analysis device according to the present embodiment, the reagent used in the analysis unit 108 is also contained in the sample container 115, and not only is the reagent conveyed to the analysis unit 108 by the carrier 102, but also the aliquoting mechanism 109 aspirates the reagent from the sample container 115 and discharges the reagent into the reagent container 113 in the analysis unit 108. Therefore, the reagent can be automatically replenished without stopping the analysis unit 108. Moreover, since it is not necessary to provide a dedicated mechanism for replenishing the reagent, it is also possible to prevent an increase in cost and an increase in unit size.

Before aliquoting a new reagent into the reagent container 113, the aliquoting mechanism aspirates and discards the reagent remaining in the reagent container 113, and also cleans the inside of the reagent container 113. Therefore, mixing of an old reagent and a new reagent can be prevented, and conditions of the reagent can be well maintained. Further, since the expiration date of the remaining reagent is also checked before the reagent is replenished, it is also possible to reduce a consumption amount of the reagent while maintaining the conditions of the reagent.

The invention is not limited to the embodiment described above, and the components may be modified without departing from the gist of the invention. For example, in the aliquoting mechanism 109, a device that aliquots a sample to the measurement unit and a device that replenishes the reagent container 113 with a reagent may be separately provided. A plurality of components disclosed in the embodiment described above may be combined appropriately. Further, some components may be deleted from all the components illustrated in the embodiment described above.

### Reference Signs List

101: control computer
102: carrier
103: ID reader
104: conveyance line
105: specimen feeding and collecting unit
106: collecting unit
107: feeding portion
108: analysis unit
109: aliquoting mechanism
110: first measurement unit
111: second measurement unit
112: reagent placement portion
113: reagent container (second container)
114: communication line
115: sample container (first container)
116: inner-analysis-unit conveyance line
117: sample container setting portion
118: sample ID
119: carrier ID
120: association information setting screen
121: input field

## Claims

1. An automatic analysis device comprising:
a feeding portion into which a first container containing a liquid is fed;
an analysis unit configured to analyze a sample; and
a conveyance line configured to convey the first container from the feeding portion to the analysis unit, wherein
the analysis unit includes
a measurement unit configured to measure a target component contained in the sample,
a reagent placement portion in which a second container containing a reagent is disposed, and
an aliquoting mechanism configured to aspirate the reagent from the first container and discharge the reagent into the second container.

2. The automatic analysis device according to claim 1, wherein
the first container includes a container that contains the sample and a container that contains the reagent, and when the sample is contained in the first container, the aliquoting mechanism aspirates the sample from the first container and discharges the sample into the measurement unit.

3. The automatic analysis device according to claim 2, further comprising:
an input unit to which information in association with the first container containing the reagent is input.

4. The automatic analysis device according to claim 1, wherein
the reagent to be contained in the second container is used for cleaning or conditioning the aliquoting mechanism or the measurement unit.

5. The automatic analysis device according to claim 1, wherein
the aliquoting mechanism aspirates and discards the reagent remaining in the second container before aliquoting a new reagent into the second container.

6. The automatic analysis device according to claim 5, wherein
the aliquoting mechanism cleans the second container after discarding the reagent remaining in the second container.

7. The automatic analysis device according to claim 5, wherein
when an amount of the reagent remaining in the second container is less than a predetermined amount, the aliquoting mechanism aspirates and discards the container remaining in the second container.

8. The automatic analysis device according to claim 5, wherein
when an expiration date of the reagent remaining in the second container expires, the aliquoting mechanism aspirates and discards the reagent remaining in the second container.
